# EUROPEAN PATENT SPECIFICATION

(11) **EP 1 445 291 B1**
(45) Date of publication and mention of the grant of the patent: **11.06.2008**
(21) Application number: 04002602.3
(22) Date of filing: 05.02.2004
(51) Int. Cl.: B41J 2/21, C09D 11/00, B41M 5/00, B41J 2/01

(54) **Ink set, image recording method and image recording apparatus**
Tintenset, Bildaufzeichnungsverfahren und Bildaufzeichnungsgerät
Assortiment d'encres, méthode d'enregistrement d'images et appareil d'enregistrement d'images

(30) Priority: 06.02.2003 JP 2003029174
(43) Date of publication of application: 11.08.2004
(73) Proprietor: CANON KABUSHIKI KAISHA, Ohta-ku, Tokyo (JP)
(72) Inventor: Nishiguchi, Kenji, Techn. Eng., Tokyo (JP)
(74) Representative: Weser, Wolfgang

(56) References cited:
- EP-A- 0 722 994
- EP-A- 0 739 743
- EP-A- 0 826 751
- EP-A- 0 851 013
- EP-A- 1 167 046
- US-A1- 2002 077 383

## Description

### BACKGROUND OF THE INVENTION

### Field of the Invention

The present invention relates to an ink set adapted for use in ink jet recording and having a high fixing ability especially onto plain paper to give high-quality color images, and an image recording method and an image recording apparatus utilizing the same.

### Related Background Art

The ink jet recording method carries out recording by shooting out an ink droplet and depositing it on a recording medium such as paper. As described, for example, in Japanese Patent Publication Nos. 61-59911, 61-59912 and 61-59914, an ink jet recording method employs an electrothemal converting member to provide thermal energy to ink to generate a bubble in the ink thereby discharging an ink droplet. According to this method, multiple orifices at a high density in a recording head can be easily realized, by which high-speed recording with high resolution and high image quality is achieved.

Conventional ink jet ink is generally composed of water as a main component with a water-soluble high-boiling point solvent such as glycol or the like to prevent drying or clogging.

However, when recording is carried out with such an ink on plain paper, there may occur insufficient fixation or uneven image formation presumably due to uneven distribution of the filler or sizing agent on the surface of the recording paper. Particularly in case of color image formation, bleeding or uneven color mixing occurs at the boundary of different color regions (hereinafter referred to as "bleeding") because inks of different colors are superposed in succession before they are fixed, resulting in unsatisfactory image formation.

To solve such problems by improving the fixing properties, there have been proposed to add a penetrability-improving compound such as a surfactant in the ink (for example Japanese Patent Application Laid-open No. S55-65269) or to employ an ink mainly composed of a volatile solvent (for example Japanese Patent Application Laid-open No. S55-66976).

However, in the former method, although the high penetrability of the ink into the recording paper can improve the fixing properties or prevent bleeding to a certain extent, the coloring material also penetrates together with the ink deep into the recording paper resulting in low density and low color saturation of the image. In addition, the ink also spreads laterally causing decrease in edge sharpness and resolution. The latter method is also undesirable because it has a problem, in addition to the drawbacks of the former method, that clogging tends to occur in the nozzles of the recording head by solvent evaporation therein.

In order to improve the aforementioned problems, there have been proposed various methods that apply a liquid onto the recording medium prior to the discharge of the recording ink to obtain good images. For example, there have been proposed, for example, to apply a liquid containing a basic polymer onto the recording medium and then applying an ink containing an anionic dye (for example, Japanese Patent Application Laid-open No. S63-60783), to mix a first liquid containing a reactive chemical species, and a second liquid containing a compound reacting with such a reactive chemical species on the recording medium (for example Japanese Patent Application Laid-open No. S63-22681), and to apply a liquid containing an organic compound having two or more cationic groups per molecule onto a recording medium and then apply an ink containing an anionic dye (e.g., Japanese Patent Application Laid-open No. S63-299971). There is also a method of applying an acidic liquid containing succinic acid or the like onto a recording medium, and then applying an ink containing an anionic dye (e.g., Japanese Patent Application Laid-open No. S64-9279). Furthermore, there is also a method that applies a liquid that insolubilize the ink dye prior to application of the ink for recording (for example Japanese Patent Application Laid-open Nos. S64-63185 and S64-69381).

However, these methods are to cause precipitation of the dye thereby suppressing image blurring or improving water resistance, and still insufficient in the effect of suppressing the aforementioned bleeding between the color inks, and, the precipitated dye tends to locate unevenly on the recording paper causing poor coverage of the pulp fibers of the recording paper, resulting in low uniformity of the image.

There is also proposed a method of preventing bleeding utilizing the reaction between a polyvalent metal ion and a carboxyl group (e.g., Japanese Patent Application Laid-open No. H5-202328). In this method, a liquid containing a polyvalent metal ion is first impregnated into a recording medium and then reacted with a color ink, so that the bleeding phenomenon can be suppressed to a certain extent. However, there may be such drawbacks as low color development and ink penetration to the back surface of the recording medium when the ink penetrability is high, or long fixation time when the penetrability is low. Furthermore, there is proposed a bleed-suppressing method by reaction between the pigment, a resin emulsion and a polyvalent metal salt (for example Japanese Patent Application Laid-open No. H9-207424), but its basic concept is similar to that of the aforementioned Japanese Patent Application Laid-open No. H5-202328.

In the above prior arts, the fixing property and the color developing property are in a trade-off relationship, and there has been no study for improving both of them by improving the polymer for dispersing the pigment. See also, e.g., EP 0 739 743 or EP 1 167 046.

Also in a pigment-based ink, the mechanism of dispersion and aggregation of fine pigment particles dispersed with a dispersant is dealt as that of colloidal particles such as fine particles of a metal oxide, and a theory thereof is described in known references, for example, *Koroido Kagaku I*, (Colloid Science, Basic and Dispersion/Adsorption (Tokyo Kagaku Dojin)). According to such a theory, the fine particles in the liquid maintain a dispersed state or cause aggregation according to a balance between the repulsive force due to the Coulomb force and steric interaction, and the attractive force due to the van der Waals force. It has been proposed to employ a graft polymer as a dispersant (for example, Japanese Patent Application Laid-open Nos. H6-100810 and H10-87768), and such proposals are to utilize a graft polymer in which either of the main chain and the side chain is constituted of a more hydrophilic segment and the other is constituted of a more hydrophobic segment, so that the hydrophobic segment adsorbs to the pigment surface while the hydrophilic segment is in contact with the liquid to increase the Coulomb force and the steric interaction thereby stabilizing the dispersion.

Such ink, however, cannot cause sufficient aggregation of the fine pigment particles when utilized together with a reactive liquid. Thus it cannot provide a recorded material of a high color development with satisfactory fixation.

### SUMMARY OF THE INVENTION

In consideration of the foregoing, an object of the present invention is to provide an ink set capable of providing an image of a high recording density with an excellent fixing property even in ink jet recording on plain paper, an image recording method and an image recording apparatus utilizing the same.

These objects are achieved by the ink set according to claim 1, the image recording method according to claim 8, and the image recording apparatus according to claim 15. The other claims relate to further developments.

### BRIEF DESCRIPTION OF THE DRAWINGS

Fig. 1 is a schematic perspective view showing an example of an ink jet printer being an image recording apparatus of the present invention;
Fig. 2 is a schematic perspective view showing an example of an ink jet cartridge; and
Fig. 3 is a schematic perspective view showing an example of a liquid discharge head.

### DETAILED DESCRIPTION OF THE PREFERRED EMBODIMENTS

In the following, the present invention will be explained in more detail with preferred embodiments thereof. An ink set of the present invention comprises independently at least a reactive liquid to be applied to a recording medium in advance, and an ink jet ink to be applied to the recording medium thereafter. They are explained in the following.

### <Ink jet ink>

An ink jet ink (hereinafter simply called "ink") to be employed in the present invention employs a pigment as a coloring agent, and a graft polymer as a dispersant thereof. In such graft polymer, a main chain contains a monomer unit having a hydrophilic functional group at 50 mass% or more of all monomer units constituting the main chain, and side chains contain a monomer unit having a hydrophobic functional group at 50 mass% or more of all monomer units constituting the side chains. It is particularly preferable that, in the main chain, the proportion of the monomer unit having a hydrophilic function group is 70 mass% or more and, in the side chain, the proportion of the monomer unit having a hydrophobic function group is 70 mass% or more, to enhance hydrophilicity of the main chain and hydrophobicity of the side chain.

Also in the present invention, in order to obtain a more sufficient dispersibility, it is preferred that the monomer units having a hydrophilic functional group are 10 to 50 mass% of all the monomer units constituting the graft polymer. Also it is preferred that the monomer units having a hydrophobic functional group are 40 to 90 mass% of all the monomer units constituting the graft polymer, because the amount of the polymer adsorbed to the pigment becomes very high.

Preferred examples of a monomer compound having a hydrophilic functional group, namely a hydrophilic monomer material, include a monomer compound having an acidic functional group such as acrylic acid, methacrylic acid, maleic acid, vinylsulfonic acid, vinylphosphonic acid, itaconic acid, or fumaric acid, and a vinyl compound such as a maleic acid derivative, a fumaric acid derivative, acrylamide, a 2-hydroxyalkyl (meth)acrylate ester, a poly(ethyleneglycol) (meth)acrylate ester, an ethylene oxide-denatured (meth)acrylic acid derivative, morpholine (meth)acrylate, N-vinylacetamide or N-vinylformamide. Among these, acrylic acid is particularly preferable. In the present invention, one of these compounds, or two or more are suitably selected.

It is preferable to employ the above monomer having an acidic functional group as a constituent of the main chain, as it causes prompt aggregation of the pigment dispersed in the ink in a reaction with a reactive liquid explained later. Among the aforementioned acidic functional groups, a monomer having a carboxyl group is more preferably employed as the constituent of the main chain, since it can cause more prompt aggregation of the pigment dispersed in the ink in reaction with the reactive liquid explained later.

Preferred examples of a monomer material having a hydrophobic functional group, namely a hydrophobic monomer material, include an aromatic vinyl compound such as a styrene, a styrene derivative, vinylnaphthalene, a vinylnaphthalene derivative, a vinyl benzoate or a benzyl (meth)acrylate, and an aliphatic vinyl compound such as methyl acrylate, butyl acrylate or stearyl acrylate. Among these, an aromatic vinyl compound is particularly preferred, and a benzyl (meth)acrylate is more preferable. In the present invention, one of these materials, or two or more are suitably selected.

The graft polymer employed in the present invention preferably has a weight-average molecular weight within a range from 1,000 to 30,000, more preferably 3,000 to 15,000. Also a number-average molecular weight is within a range from 1,000 to 20,000, more preferably 1,000 to 15,000. Also a main chain preferably has a weight-average molecular weight within a range of 900 to 30,000, and more preferably 2,900 to 15,000. The side chain preferably is in a range of 100 to 10,000, and more preferably 1,000 to 8,000 of the weight-average molecular weight.

In the present invention, two or more kinds of such graft polymers may be employed. The graft polymer preferably contained within a range of 0.1 to 15 mass% with respect to the entire mass of the ink. A mixing ratio with the pigment is, in a (weight) ratio of graft polymer to pigment, preferably within a range of 1:10 to 5:1, and more preferably 1:6 to 2:1.

Such graft polymer may be prepared by any known method. Preferably the graft monomer may be prepared by preparing the main chain and the side chain separately from monomers having plural reactive functional groups in advance and then mixing them for bonding reaction between the main chain and the side chain, or it may be prepared by synthesizing a side chain as a macromonomer in advance and then reacting a monomer material to constitute the main chain and the macromonomer.

Also the ink may contain, if necessary, a polymer material other than the above graft polymer. Usable polymer material may be any polymer, such as vinylic (co)polymer, polysaccharide, polypeptide, polyamide, polyester, polyether and polyolefin, preferably a water-soluble resin. Also such polymer material is preferably contained in an amount not exceeding the amount of the graft polymer. Such polymer materials preferably have a weight-average molecular weight within a range from 1,000 to 3,000,000.

The reason why the aforementioned remarkable effect is obtained by the configuration of the present invention is not yet clear, but is considered as follows.

As explained in the foregoing, the state of dispersion and aggregation of the pigment in the ink is considered to depend on a balance between the repulsive force due to Coulomb force and steric interaction, and the attractive force due to van der Waals force. When a graft polymer is adsorbed on a pigment, the main chain assumes a crimped state, and, since the main chain is hydrophilic and the side chain is hydrophobic in the present invention, the side chain is directed toward the pigment while the crimped main chain is directed toward the aqueous medium. As a result, the pigment particles on which the graft polymer is adsorbed show a higher steric hindrance and show a high electrical density at the interface with the aqueous medium in comparison with a case where the main chain is hydrophobic and the side chain is hydrophilic, whereby the pigment particles are dispersed in the ink very satisfactorily. On the other hand, due to the high electrical density in the aqueous medium interface, reaction with the cations (for example, polyvalent metal ions as will be explained later) in the reactive liquid occurs very efficiently, thereby causing a prompt electrical neutralization of the graft polymer. As a result, aggregation of the pigment takes place very efficiently and rapidly.

A pigment to be used in the ink of the present invention is employed in a mass ratio of 1 to 20 mass% with respect to the entire mass of the ink, preferably 2 to 12 mass%. Examples of the pigment to be used in the present invention are as follows. Specifically, as a black pigment, there can be utilized carbon black, for example prepared by a furnace method or a channel method, preferably with a DBP oil absorption amount of 40 to 200 ml/100 g, a primary particle size of 15 to 40 mµ (nm), a specific surface area measured by BET method of 50 to 400 m²/g, a volatile content of 0.5 to 10 % and a pH value of 2 to 9. Examples of commercial products having such characteristics include No. 2300, No. 900, MCF88, No. 33, No. 40, No. 45, No. 52, MA7, MA8, No. 2200B (foregoing manufactured by Mitsubishi Chemical Co.), RAVEN 1255 (manufactured by Columbia Carbon Co.), REGAL 400R, REGAL 330R, REGAL 660R, MOGULL (foregoing manufactured by Cabot Inc.), ColorBlack FW1, ColorBlack FW18, ColorBlack S170, ColorBlack S160, Printex 35, Printex U (foregoing manufactured by Degussa Inc.) etc., any of which can be employed advantageously.

Also examples of yellow pigment include C.I. Pigment Yellow 1, C.I. Pigment Yellow 2, C.I. Pigment Yellow 3, C.I. Pigment Yellow 13, C.I. Pigment Yellow 16, and C.I. Pigment Yellow 83. Examples of magenta pigment include C.I. Pigment Red 5, C.I. Pigment Red 7, C.I. Pigment Red 12, C.I. Pigment Red 48(ca), C.I. Pigment Red 48(Mn), C.I. Pigment Red 57(Ca), C.I. Pigment Red 112, and C.I. Pigment Red 122. Examples of cyan pigment include C.I. Pigment Blue 1, C.I. Pigment Blue 2, C.I. Pigment Blue 3, C.I. Pigment Blue 15:3, C.I. Pigment Blue 16, C.I. Pigment Blue 22, C.I. Vat Blue 4 and C.I. Vat Blue 6. Naturally the present invention is not limited to these examples. Besides, it is also possible to utilize a newly produced pigment, such as a self-dispersive pigment.

Particularly in an ink containing the aforementioned pigment, the entire ink is preferably adjusted to neutral or alkaline. Such state causes a repulsive force by the Coulomb force between the pigment particles dispersed by the graft polymer, thereby improving the dispersion stability and realizing an ink excellent in prolonged storability. In such a case, it is preferred that the graft polymer contains a monomer having an acidic functional group, since the repulsive Coulomb force between the pigment particles increases to further improve the dispersion stability. However, since such condition may cause corrosion on various components used in an ink jet recording apparatus, the ink is preferably maintained at a pH within a range of 7 to 10. A pH-adjusting agent to be employed in such case can be, for example, an organic amine such as diethanolamine or triethanolamine, an inorganic alkali for example an alkali metal hydroxide such as sodium hydroxide, lithium hydroxide or potassium hydroxide, an organic acid or a mineral acid. The aforementioned pigment and the graft polymer serving as the dispersant are dispersed or dissolved in an aqueous medium.

An aqueous medium preferably used for the pigment-containing ink is a mixed solvent of water and a water-soluble organic solvent, and the water is not ordinary water containing various ions, but preferably is ion-exchanged water (deionized water).

Examples of the water-soluble organic solvent to be mixed with water include an alkyl alcohol of 1 to 4 carbon atoms such as methyl alcohol, ethyl alcohol, n-propyl alcohol, isopropyl alcohol, n-butyl alcohol, sec-butyl alcohol or tert-butyl alcohol; an amide such as dimethylformamide or dimethylacetamide; a ketone or a ketoalcohol such as acetone or diacetone alcohol; an ether such as tetrahydrofuran or dioxane; a polyalkylene glycol such as polyethylene glycol or popypropylene glycol; an alkylene glycol in which an alkylene group includes 2 to 6 carbon atoms such as ethylene glycol, propylene glycol, butylene glycol, triethylene glycol, 1,2,6-hexanetriol, thiodiglycol, hexylene glycol or diethylene glycol; glycerin; a lower alkyl ether of a polyhydric alcohol such as ethylene glycol monomethyl(or ethyl) ether, diethylene glycol methyl(or ethyl) ether or triethylene glycol monomethyl(or ethyl) ether; N-methyl-2-pyrrolidone, 2-pyrrolidone and 1,3-dimethyl-2-imidazolidinone. Among these water-soluble organic solvents, there is preferred a polyhydric alcohol such as diethylene glycol, or a lower alkyl ether of a polyhydric alcohol such as triethylene glycol monomethyl(or ethyl) ether.

The content of such water-soluble organic solvent in the ink is generally within a range of 3 to 50 mass% in the entire mass of the ink, preferably 3 to 40 mass%. Also the content of the water is 10 to 90 mass% of the entire mass of the ink, preferably 30 to 80 mass%.

In the ink of the present invention, in addition to the above-mentioned components, a surfactant, a defoaming agent, an antiseptic etc. may be suitably added, if necessary, in order to obtain an ink of desired physical properties. In particular, it is necessary to add a surfactant, functioning as a penetration accelerator, in an appropriate amount for achieving a function of causing a prompt penetration of the reactive liquid and the liquid component of the ink into the recording medium. An amount of addition is for example 0.05 to 10 mass%, preferably 0.5 to 5 mass%. There can be advantageously employed an anionic surfactant of an ordinarily employed type, such as a carboxylic acid salt type, a sulfuric acid ester type, a sulfonic acid salt type or a phosphoric acid ester type.

An ink containing the aforementioned pigment can be prepared by: first adding a pigment to an aqueous medium in which at least a graft polymer serving as a dispersant and water are mixed, and, after an agitation of the mixture, dispersing the mixture with dispersion means to be explained later, followed by a centrifuging if necessary, to obtain a desired dispersion. Then the dispersion is added with a sizing agent and suitable additives as mentioned in the foregoing and agitated to obtain an ink to be employed in the present invention.

In case of employing an aforementioned alkalisoluble resin as a dispersant, it is necessary to add a base for dissolving the resin, and for this purpose there can be employed an organic base such as monoethanolamine, diethanolamine, triethanolamine, aminemethyl propanol or ammonia, or an inorganic base such as potassium hydroxide or sodium hydroxide.

In the preparation of the ink containing the pigment, it is effective to carry out a pre-mixing step of mixing the aqueous medium containing the pigment for 30 minutes or longer, prior to the dispersion process. Such pre-mixing step is preferable as it improves the wetting property of the pigment surface and accelerates the adsorption of the dispersant to the pigment surface.

For such dispersion process of the pigment, there can be employed any ordinarily employed dispersing equipment such as a ball mill, a roller or a sand mill. Among these, a sand mill of a high speed type is preferably employed. Examples of such equipment include Super Mill, Sand Grinder, Beads Mill, Agitator Mill, Glenn Mill, Dyno Mill, Pearl Mill and Cobol Mill (all trade names).

In the preparation of an ink containing a pigment for ink jet recording, there is employed a pigment of an optimum particle size distribution in consideration of, for example, a nozzle clogging resistance, and the pigment of a desired particle size distribution can be obtained, for example, by a method of reducing a size of crushing media in the dispersing equipment, a method of increasing a filling rate of the crushing media, a method of extending the process time, a method of reducing a discharge rate, a method of executing a classification with a filter or a centrifuge after the crushing, or a combination of these methods.

In the following, explained is a reactive liquid to be employed together with the ink of the aforementioned configuration. A most preferred reactant, contained in the reactive liquid of the present invention and capable of reacting with the ink can be a polyvalent metal salt. A polyvalent metal salt is constituted of a polyvalent metal ion of di- or higher-valent state and anions binding to the polyvalent metal ion. Preferred examples of the polyvalent metal ion includes a divalent metal ion such as Ca²⁺, Cu²⁺, Ni²⁺, Mg²⁺ or Zn²⁺, and a trivalent metal ion such as Fe³⁺ or Al³⁺. Examples of the anion include Cl⁻, NO₃⁻ and SO₄²⁻. Also for forming an aggregation film of the pigment by an instantaneous reaction, it is preferred that a total charge concentration of the polyvalent metal ions in the reactive liquid is twice or more of the total charge concentration of the ions of the opposite polarity in the reactive liquid.

Examples of a water-soluble organic solvent employable in the reactive liquid of the present invention include an amide such as dimethylformamide or dimethylacetamide; a ketone such as acetone; an ether such as tetrahydrofuran or dioxane; a polyalkylene glycol such as polyethylene glycol or polypropylene glycol; an alkylene glycol such as ethylene glycol, propylene glycol, butylene glycol, triethylene glycol, 1,2,6-hexanetriol, thiodiglycol, hexylene glycol or diethylene glycol; a lower alkyl ether of a polyhydric alcohol such as ethylene glycol methyl ether, diethylene glycol monomethyl ether or triethylene glycol monomethyl ether; a monohydric alcohol such as ethanol, isopropyl alcohol, n-butyl alcohol or isobutyl alcohol; also glycerin, N-methyl-2-pyrrolidone, 1,3-dimethyl-imidazolidinone, triethanolamine, sulforan, and dimethyl sulfoxide. A content of such water-soluble organic solvent in the reactive liquid of the present invention is not particularly restricted, but is preferably within a range of 5 to 60 mass% of the entire mass of the reactive liquid, more preferably 5 to 40 mass%.

In the reactive liquid of the present invention, it is possible to suitably add other additives such as a viscosity regulating agent, a pH regulating agent, an antiseptic agent or an antioxidant if necessary, but an attention is necessary in the selection and the amount of the surfactant, functioning as a penetration accelerating agent, in suppressing the penetrability of the reactive liquid in the recording medium. Also the reactive liquid in the present invention is preferably colorless, but it may also have such a pale color as not to change the hue of each color ink when mixed with the ink on the recording medium. Furthermore, the reactive liquid of the present invention is preferably so adjusted in the physical property that a viscosity at about 25°C lies within a range of 1 to 30 cps.

A recording medium to be used in the execution of the present invention is not particularly limited, and so-called plain paper such as a copying paper or a bond paper conventionally utilized can be employed advantageously. It is naturally possible also to employ a coated paper or an OHP transparent film, prepared for ink jet recording, or also an ordinary high-quality paper or a glossy paper.

An image forming method utilizing the ink set of the present invention can be any method in which the reactive liquid and the ink can co-exist on the recording medium, but it is required to apply the reactive liquid to the recording medium in advance and then the ink.

The reactive liquid may be applied onto the entire surface of the recording medium by using, for example, a spray or a roller, but it is preferable to apply the reactive liquid by an ink jet method capable of selective and uniform application only in and near the image forming area where the ink is to be deposited. Also the time from the deposition of the reactive liquid onto the recording medium to the deposition of the ink is not particularly limited, but it is preferably within several seconds, particularly preferably within a second in order to carry out the present invention more effectively. For depositing the reactive liquid onto the recording medium, there can be employed various ink jet recording methods, but particularly preferable is a thermal ink jet method of "on-demand" type, in which a liquid droplet is discharged utilizing a bubble generated by thermal energy.

In the present invention, an image forming area means an area where ink dots are to be deposited, and a vicinity of the image forming area means an external area separated by about 1 to 5 dots from the area of ink dot deposition.

In the following there will be explained an ink jet recording method suitable for the ink set of the present invention. There will be explained a specific example of the configuration of a cartridge, a recording unit and ink jet recording apparatus, adapted for use of the reactive liquid and the ink constituting the ink set of the present invention, and a liquid discharge head advantageously employed in such apparatus.

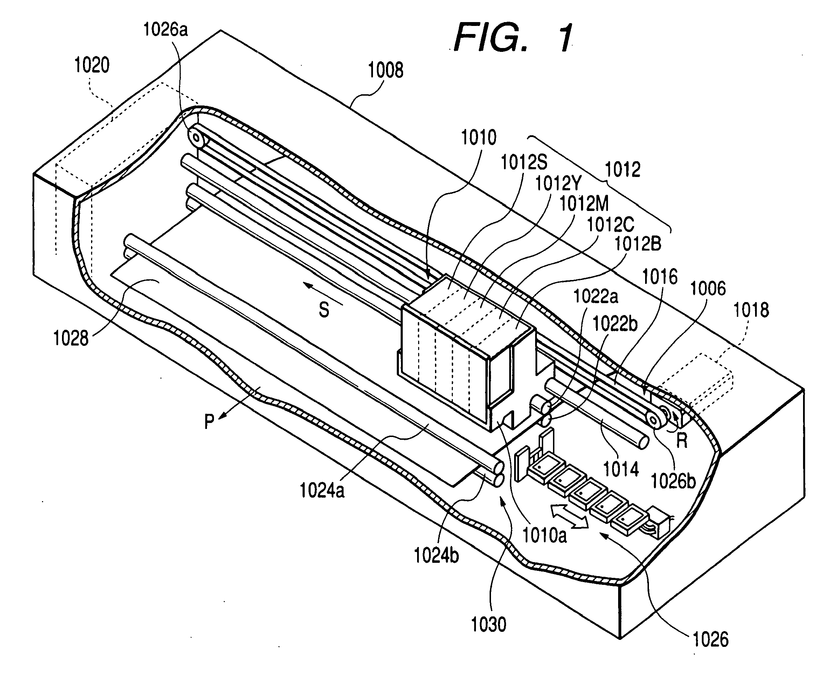

Fig. 1 is a schematic perspective view of an example of an ink jet recording head of a type in which a bubble communicates with the air at the discharge, adapted for use in the image recording apparatus of the present invention, and an ink jet printer equipped with such head.

Referring to Fig. 1, an ink jet printer is provided with a conveying apparatus 1030, which intermittently advances, in a direction P, a paper sheet 1028 constituting a recording medium and provided along a longitudinal direction of a casing 1008, a recording unit 1010 reciprocated along a guide shaft 1040 substantially parallel to a direction S which is substantially perpendicular to the conveying direction P of the sheet 1028 by the conveying apparatus 1030, and a movement drive unit 1006 serving as drive means for reciprocating the recording unit 1010. 1020 indicates a drive unit.

The movement drive unit 1006 is constituted of pulleys 1026a, 1026b provided on rotating shafts mutually positioned with a predetermined distance, a belt 1016 supported by such two pulleys, roller units 1022a, 1022b, and a motor 1018 for driving, in forward and reverse directions, the belt 1016 arrange substantially parallel to the roller units and connected to a carriage member 1010a of the recording unit 1010.

When the motor 1018 is activated to rotate the belt 1016 in a direction R shown in Fig. 1, the carriage member 1010a of the recording unit 1010 is displaced by a predetermined displacement amount in the direction S shown in Fig. 1. Also when the motor 1018 is activated to rotate the belt 1016 in a direction opposite to the direction R shown in Fig. 1, the carriage member 1010a of the recording unit 1010 is displaced by a predetermined displacement amount in a direction opposite to the direction S shown in Fig. 1. In a home position of the carriage member 1010a at an end of the movement drive unit 1006, a recovery unit 1026 for executing a discharge recovery process of the recording unit 1010 is provided in an opposed arrangement to an array of the ink discharge ports of the recording unit 1010.

In the recording unit 1010, ink jet cartridges (hereinafter often represented simply as cartridge) 1012Y, 1012M, 1012C and 1012B holding inks respectively containing pigments of yellow, magenta, cyan and black colors, and 1012S holding a reactive liquid, are detachably mounted on the carriage member 1010a.

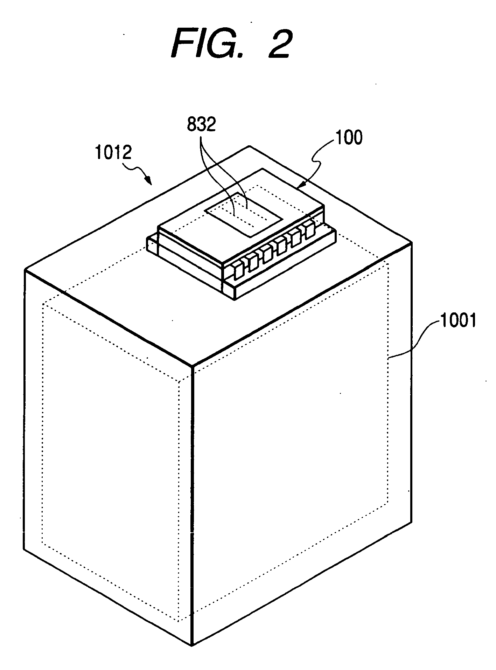

Fig. 2 shows an example of an ink jet cartridge mountable in the aforementioned ink jet recording apparatus. The cartridge 1012 in the present embodiment is of a serial type, and is mainly constituted of an ink jet recording head 100 and a liquid tank 1001 containing a liquid such as an ink.

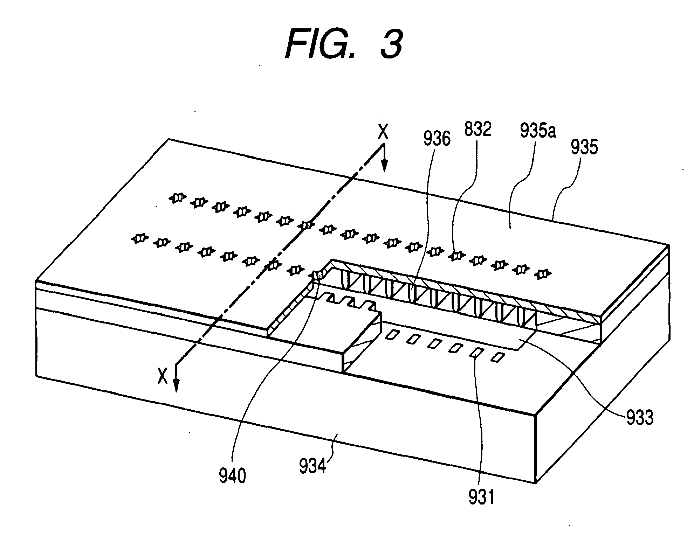

The ink jet recording head 100 is provided with a plurality of discharge ports for discharging liquid, and a liquid such as the reactive liquid is guided from the liquid tank 1001, through an unrepresented liquid supply path, to a common liquid chamber (cf. Fig. 3) of the liquid discharge head 100. The cartridge 1012 shown in Fig. 2 is integrally formed by the ink jet recording head 100 and the liquid tank 1001 for enabling liquid supply to the liquid tank 1001 whenever necessary, but there may also be adopted a structure in which the liquid tank 1001 is replaceably connected to the liquid discharge head 100.

In the following, there will be given a more detailed explanation on a specific example of the liquid discharge head, which can be mounted on the ink jet printer of the aforementioned configuration. Fig. 3 is a schematic perspective view showing schematically a main portion of a liquid discharge head, adapted for use in the ink jet recording apparatus of the present invention. In the drawing, electric wirings for driving electrothermal converting elements are omitted.

The liquid discharge head employed in the present invention utilizes a substrate 934 for example of glass, ceramics, plastics or metal, as shown in Fig. 3. A material of such substrate is not an essential feature of the present invention, and is not particularly restricted as long as it can serve as a support member for a material layer for forming an ink discharge energy generating element, and a liquid flow path and a discharge port, to be explained later. Therefore, the present embodiment will be explained by a case of employing a Si substrate (wafer). An ink discharge port is formed on such substrate 934, for example by a forming method with a laser beam, or, for example, by a method of forming a discharge port, utilizing an exposure apparatus such as a mirror projection aligner and constituting an orifice plate (discharge port plate) 935 with a photosensitive resin.

Referring to Fig. 3, a substrate 934 is provided with electrothermal converting elements (hereinafter also called heater) 931 and an ink supply aperture 933 constituted of an elongated groove-shaped penetrating aperture and serving as a common liquid chamber, and heaters 931 constituting thermal energy generating means are arranged in linear arrays in respective sides of the ink supply aperture 933 along the longitudinal direction thereof and in mutually staggered manner with a pitch of the electrothermal converting elements for example of 300 dpi. The substrate 934 is also provided with ink flow path walls 936 form forming ink flow paths. The ink flow walls 936 are further provided with a discharge port plate 935 having discharge ports 832.

In Fig. 3, the ink flow path wall 936 and the discharge port plate 935 are illustrated as separate members, but it is also possible to simultaneously form the ink flow path walls 936 and the discharge port plate 935 as a single member, by forming such ink flow path walls 936 for example by spin coating on the substrate 934. A discharge port surface (upper surface) 935a is subjected to a water-repellent treatment. The illustrated apparatus employs a head of a serial type, executing recording in a scanning motion in the direction S shown in Fig. 1, and carries out a recording with a density of 1200 dpi. There is employed a drive frequency of 10 kHz, so that each discharge port executes discharges with a minimum time interval of 100 µs.

A liquid discharge operation by the ink jet recording head of the above-described configuration is shown in Figs. 16 to 23 of Japanese Patent Application Laid-open No. 2002-201390 and in a description thereof.

In a liquid discharge head described for example in Japanese Patent Application Laid-open No. 2002-201390, at the liquid discharge in a volume reducing stage after a bubble reaches a maximum volume, the direction of a main liquid droplet at the discharge can be stabilized by plural grooves positioned in dispersed manner with respect to the center of the discharge port. As a result, there can be provided a liquid discharge head of a high liquid landing precision, without a deviation in the discharge direction. Also there can be realized a high-speed printing of a high definition, since the discharge can be carried out stably against a fluctuation in the bubble formation at a high drive frequency.

Particularly in a liquid discharge head described in Japanese Patent Application Laid-open No. 2002-201390, a liquid discharge is carried out in a volume reducing stage of the bubble by causing such bubble to communicate with the air, thereby preventing a mist generated at the liquid droplet discharge caused by communication of the bubble with the air and thus suppressing deposition of a liquid droplet on the orifice surface, leading to a sudden failure in the liquid discharge. Another embodiment of the recording head of the discharge method in which the bubble communicates with the air as explained above, advantageously employable in the present invention, is for example so-called edge shooter type as described in Japanese Patent No. 2783647.

Among various ink jet printing systems, the present invention brings about excellent effects particularly in a printing head or a printing device of the type executing a recording by forming flying liquid droplets, utilizing thermal energy. As to its representative configuration and principle, for example the one practiced by the use of the basic principle disclosed in the U.S. Patents Nos. 4,723,129 and 4,740,796 is preferred.

This system is applicable to either of the so-called on-demand type and the continuous type. Particularly the case of the on-demand type is effective because, by applying at least one driving signal which gives rapid temperature elevation exceeding nucleus boiling corresponding to the recording information on an electrothermal converting member arranged corresponding to the sheets or liquid channels holding liquid (ink), thermal energy is generated at the electrothermal converting member to induce film boiling at the heat action surface of the printing head, and a bubble can be consequently formed in the liquid (ink) corresponding one-to-one to the driving signals. By discharging the liquid (ink) through a discharge opening by the growth and shrinkage of the bubble, at least a droplet is formed. By forming the driving signals into pulse shapes, growth and shrinkage of the bubble can be effected instantly and adequately to accomplish more preferable discharging of the liquid (ink) particularly excellent in the response characteristics.

As the driving signals of such pulse shapes, those disclosed in the U.S. Patents Nos. 4,463,359 and 4,345,262 are suitable. Further excellent recording can be performed by employment of the conditions described in the U.S. Patent No. 4,313,124 of the invention concerning the temperature elevation rate of the above-mentioned heat action surface.

As the configuration of the printing head, in addition to the combinations of the discharging orifice, liquid channel and electrothermal converting member (linear liquid channel or right-angled liquid channel) as disclosed in the above-mentioned respective specifications, the configuration by the use of the U.S. Patents Nos. 4,558,333 and 4,459,600 disclosing the configuration having the heat action portion arranged in the flexed region is also included in the present invention.

In addition, the present invention can also be effectively applied to the configuration of the Japanese Patent Laid-open Application No. S59-123670 using a slit common to a plurality of electrothermal converting members as the discharging portion of the electrothermal converting members or of the Japanese Patent Laid-open Application No. S59-138461 having the opening for absorbing a pressure wave of thermal energy corresponding to the discharging portion.

Furthermore, the present invention is effectively applicable to the printing head of the full line type having a length corresponding to the maximum width of the printing medium which can be recorded by the printing device, and such printing head may have a configuration realizing such length by the combination of plural printing heads, or a configuration constituted by an integrally formed single printing head.

In addition, the present invention is effective, within the printing devices of the serial type mentioned above, in a printing head fixed to the main body of the printing device, or an exchangeable chip-type printing head enabling electrical connection with the main body of the printing device or ink supply from such main body by being mounted on the main body, or the printing head of a cartridge type in which an ink tank is integrally provided in the printing head itself.

Also in the configuration of the printing device of the present invention, the addition of discharge restoration means for the printing head, preliminary auxiliary means etc. is preferable, because the effect of the present invention can be further stabilized. Specific examples of these may include, capping means, cleaning means, pressurization or aspiration means, preliminary heating means for effecting heating by an electrothermal converting member, another heating element or a combination thereof, and preliminary discharge means for effecting an idle discharge independent from that for printing.

In the following, the present invention will be explained in more detail by Examples and Comparative Examples, but the present invention is not limited thereto. In the description, "part" is by mass unless specified otherwise.

### <Example 1>

### (Synthesis of side chain polymer A1)

A mixture of 80 parts of styrene, 20 parts of butyl acrylate and an appropriate amount of azobisisobutyronitrile was added to propylene glycol monomethyl ether dropwise under nitrogen flow at 75°C to carry out radical polymerization. The unreacted substance was eliminated by precipitation purification. Then 80 parts of the obtained purified product dissolved in propylene glycol monomethyl ether, to which a mixture of 20 parts of glycidyl methacrylate was added under N₂ flow at 75°C dropwise. The unreacted substance was eliminated by precipitation purification, to obtain a side chain polymer A1 having a glycidyl group at an end. The side chain polymer A1 had a number-average molecular weight of 1,000 and a weight-average molecular weight of 2,300.

### (Synthesis of main chain polymer B1)

A mixture of 50 parts of acrylic acid, 30 parts of 2-hydroxyethyl methacrylate, 20 parts of ethyl acrylate and an appropriate amount of azobisisobutyronitrile was added dropwise to propylene glycol monomethyl ether under N₂ flow at 75°C. The unreacted substance was eliminated by precipitation purification to obtain a main chain polymer B1 having hydroxyl groups capable of reacting with the glycidyl group introduced into the side chain polymer A1. The main chain polymer B1 had a number-average molecular weight of 4,000 and a weight-average molecular weight of 5,600.

### (Synthesis of graft polymer C1)

60 parts of the main chain polymer B1 and 40 parts of the side chain polymer A1 obtained above were dissolved in tetrahydrofuran and reacted for 3 hours at 80°C. The unreacted substance was eliminated by precipitation purification to obtain a graft polymer C1. The graft polymer C1 had a number-average molecular weight of 10,000 and a weight-average molecular weight of 13,000.

All the monomer materials used in the side chain polymer A1 have a hydrophobic functional group, while, among the monomer materials used in the main chain polymer B1, acrylic acid and 2-hydroxyethyl methacrylate are monomer materials having a hydrophilic functional group but ethyl acrylate is a monomer material having a hydrophobic functional group, so that all the monomer units constituting the side chain of the graft polymer C1 are hydrophobic (100 mass% hydrophobic), and 80 mass% of all the monomer units constituting the main chain are hydrophilic and 20 mass% are hydrophobic.

### (Preparation of pigment dispersion PK1)

| | |
|---|---|
| Graft polymer C1 | 3 parts |
| Ethylene glycol | 5 parts |
| Ion-exchanged water | 76 parts |
| KOH | 1 part |

These components were mixed and heated to 70°C on a water bath to dissolve the graft polymer. The solution was added with 15 parts of carbon black (Color Black S160, manufactured by Degussa Inc.), and after pre-mixing for 30 minutes, subjected to a dispersion processing under the following conditions:
Dispersing apparatus: Sand Grinder (manufactured by Igarashi Kikai Co.)
Crushing media: zirconia beads (diameter: 1 mm)
Charging rate of crushing media: 100 % (vol.)
Crushing time: 3 hours.

Then the reaction was centrifuged (2,100 RCF, 30 minutes) to remove coarse particles, thereby obtaining a pigment dispersion PK1.

### (Preparation of ink K1).

| | |
|---|---|
| Pigment dispersion PK1 | 30 parts |
| Glycerin | 5 parts |
| Diethylene glycol | 5 parts |
| Isopropyl alcohol | 5 parts |
| Acetylenol EH (manufactured by Kawaken Chemical Co.) | 1 part |
| Ion-exchanged water | 54 parts |

The above-mentioned components were mixed to obtain ink K1.

### (Ink C1)

A pigment ink C1 was prepared in the same manner as the preparation of the ink K1 except that the carbon black was replaced with Pigment Blue 15:3.

### (Ink M1)

A pigment ink M1 was prepared in the same manner as the preparation of the ink K1 except that the carbon black was replaced with Pigment Red 122.

### (Ink Y1)

A pigment ink Y1 was prepared in the same manner as the preparation of the ink K1 except that the carbon black was replaced with Pigment Yellow 109.

### (Composition of reactive liquid S1)

| | |
|---|---|
| Diethylene glycol | 10.0 parts |
| Methyl alcohol | 5.0 parts |
| Magnesium nitrate | 3.0 parts |
| Acetylenol EH (manufactured by Kawaken Chemical Co.) | 0.1 parts |
| Ion-exchanged water | 81.9 parts |

A print 1A was prepared using thus prepared reactive liquid S1 and the inks K1, C1, M1 and Y1 and plain PB paper (manufactured by Canon Inc.): first applying the reactive liquid S1 to the recording paper and then inks K1, C1, M1 and Y1 so that the reactive liquid S1 and inks come in contact in a liquid state. There was employed a recording head of a recording density of 1,200 dpi, and a drive frequency of 15 kHz. The head ejected ink at a discharge volume of 4 p1 per dot. Also the environmental conditions for the printing test were 25°C/55 %RH.

Under visual observation, the print 1A did not show bleeding or blur between colors. Also when a print portion was rubbed with an edge portion of other paper about 5 seconds after printing, the printed image did not run. The printed portions with the inks K1, C1, M1 and Y1 showed optical reflective densities, measured by a reflective densitometer RD-191 (manufactured by Gretag Macbeth Inc.), of 1.6, 1.5, 1.5 and 1.5 respectively.

### <Example 2>

### (Synthesis of side chain polymer A2)

101 parts of diisopropylamine and 13 parts of butyl lithium dissolved in 70 parts of cyclohexane, were added to tetrahydrofuran with stirring. 24 parts of 4-methylstyrene were added to this solution and reacted for 5 minutes at 20°C. Then anionic polymerization was conducted by adding 104 parts of styrene to this reaction solution. Then the unreacted substance was removed by precipitation purification to obtain a side chain polymer A2. The side chain polymer A2 was a styrene macromonomer having a vinyl group of 4-methyl styrene at the end. The side chain polymer A2 had a number-average molecular weight of 2,400 and a weight-average molecular weight of 3,400.

### (Synthesis of graft polymer C2)

A mixture of 30 parts of acrylic acid and an appropriate amount of azobisisobutyronitrile was added dropwise to a solution of 70 parts of the side chain polymer A2 dissolved in tetrahydrofuran under N₂ flow at 75°C to carry out radical polymerization. The unreacted substance was removed by precipitation purification to obtain a graft polymer C2 comprising a main chain made from acrylic acid units and 4-methylstyrene units of the polymer A2 and styrene macromonomer side chains bonding to the 4-methylstyrene units in the main chain. The graft polymer C2 had a number-average molecular weight of 5,000 and a weight-average molecular weight of 15,000.

All the monomer materials used in the side chain polymer A2 have a hydrophobic functional group, while, among the monomer materials used in the main chain polymer, acrylic acid is a monomer material having a hydrophilic functional group but 4-methylstyrene is a monomer material having a hydrophobic functional group, so that all the monomer units constituting the side chain of the graft polymer C2 are, by 100 mass%, hydrophobic, and 70 mass% of all the monomer units constituting the main chain are hydrophilic.

### (Pigment dispersion PK2)

A pigment dispersion PK2 was prepared in the same manner as the preparation of the pigment dispersion PK1 except that the graft polymer C1 was replaced with the graft polymer C2.

### (Ink K2)

A pigment ink K2 was prepared in the same manner as the preparation of the ink K1 except that the pigment dispersion PK1 was replaced with the pigment dispersion PK2.

### (Ink C2)

A pigment ink C2 was prepared in the same manner as the preparation of the ink K2 except that the carbon black was replaced with Pigment Blue 15:3.

### (Ink M2)

A pigment ink M2 was prepared in the same manner as the preparation of the ink K2 except that the carbon black was replaced with Pigment Red 122.

### (Ink Y2)

A pigment ink Y2 was prepared in the same manner as the preparation of the ink K1 except that the carbon black was replaced with Pigment Yellow 109.

A print 1B was prepared in the same manner as in Example 1 using the reactive liquid S1 employed in Example 1 and the inks K2, C2, M2 and Y2.

Under visual observation, the print 1B did not show bleeding or blurring between colors. Also when a print portion was rubbed with an edge portion of other paper about 5 seconds after printing, the printed image did not run. The printed portions with the inks K2, C2, M2 and Y2 showed optical reflective densities, measured by a reflective densitometer RD-191 (manufactured by Gretag Macbeth Inc.), of 1.6, 1.6, 1.5 and 1.5 respectively.

### <Example 3>

### (Synthesis of side chain polymer A3)

A mixture of 50 parts of methyl methacrylate and 50 parts of butyl acrylate and an appropriate amount of azobisisobutyronitrile was added dropwise to propylene glycol monomethyl ether under N₂ flow at 75°C to carry out radical polymerization. The unreacted substance was removed by precipitation purification, and 80 parts of the purified product was dissolved in propylene glycol monomethyl ether, to which solution a mixture of 20 parts of glycidyl methacrylate and an appropriate amount of azobisisobutyronitrile was added dropwise under N₂ flow at 75°C to carry out radical polymerization. The unreacted substance was removed by precipitation purification, to obtain a side chain polymer A3 having a glycidyl group at the end. The side chain polymer A3 had a number-average molecular weight of 1,000 and a weight-average molecular weight of 2,300.

### (Synthesis of graft polymer C3)

60 parts of the main chain polymer B1 and 40 parts of the side chain polymer A3 obtained above were dissolved in tetrahydrofuran and were reacted for 3 hours at 80°C. The unreacted substance was removed by precipitation purification to obtain a graft polymer C3. The graft polymer C3 had a number-average molecular weight of 10,000 and a weight-average molecular weight of 13,000.

All the monomer materials used in the side chain polymer A1 have a hydrophobic functional group, while, the monomer materials used in the main chain polymer B1, acrylic acid and 2-hydroxyethyl methacrylate are monomer materials having a hydrophilic functional group and ethyl acrylate is a monomer material having a hydrophobic functional group, so that all (100 mass%) monomer units constituting the side chain of the graft polymer C3 had a hydrophobic function group, and 80 mass% of all the monomer units constituting the main chain had a hydrophilic function group.

### (Pigment dispersion PK3)

A pigment dispersion PK3 was prepared in the same manner as the preparation of the pigment dispersion PK1 except that the graft polymer C1 was replaced with the graft polymer C3.

### (Ink K3)

A pigment ink K3 was prepared in the same manner as the preparation of the ink K1 except that the pigment dispersion PK1 was replaced with the pigment dispersion PK3.

### (Ink C3)

A pigment ink C3 was prepared in the same manner as the preparation of the ink K3 except that the carbon black was replaced with Pigment Blue 15:3.

### (Ink M3)

A pigment ink M3 was prepared in the same manner as the preparation of the ink K3 except that the carbon black was replaced with Pigment Red 122.

### (Ink Y3)

A pigment ink Y3 was prepared in the same manner as the preparation of the ink K3 except that the carbon black was replaced with Pigment Yellow 109.

A print 1C was prepared in the same manner as Example 1 using the reactive liquid S1 employed in Example 1 and the inks K3, C3, M3 and Y3.

Under visual observation, the print 1C did not show a bleeding or blur between colors. Also when a print portion was rubbed with an edge portion of other paper about 5 seconds after printing, the printed image did not run. The printed portions with the inks K3, C3, M3 and Y3 showed optical reflective densities, measured by a reflective densitometer RD-191 (manufactured by Gretag Macbeth Inc.), of 1.4, 1.4, 1.3 and 1.3 respectively.

### <Example 4>

### (Synthesis of main chain polymer B2)

A mixture of 50 parts of vinylsulfonic acid, 30 parts of 2-hydroxyethyl methacrylate, 20 parts of ethyl acrylate and an appropriate amount of azobisisobutyronitrile was added dropwise to propylene glycol monomethyl ether under N₂ flow at 75°C. The unreacted substance was removed by precipitation purification to obtain a main chain polymer B2 having a hydroxyl group capable of reacting with the glycidyl group introduced into the side chain polymer A1. The main chain polymer B2 had a number-average molecular weight of 4,000 and a weight-average molecular weight of 5,600.

### (Synthesis of graft polymer C4)

60 parts of the main chain polymer B2 prepared above and 40 parts of the side chain polymer A1 were dissolved in tetrahydrofuran and reacted for 3 hours at 80°C. The unreacted substance was removed by precipitation purification to obtain a graft polymer C4. The graft polymer C4 had a number-average molecular weight of 8,000 and a weight-average molecular weight of 15,000.

All the monomer materials used in the side chain polymer A1 have a hydrophobic functional group, while, the monomer materials used in the main chain polymer B2, vinylsulfonic acid and 2-hydroxyethyl methacrylate have a hydrophilic functional group and ethyl acrylate has a hydrophobic functional group, so that all the monomer units constituting the side chain of the graft polymer C4 are, by 100 mass%, monomer units having a hydrophobic functional group and 80 mass% of all the monomer units constituting the main chain are monomer units having a hydrophilic functional group.

### (Pigment dispersion PK4)

A pigment dispersion PK4 was prepared in the same manner as the preparation of the pigment dispersion PK1 except that the graft polymer C1 was replaced with the graft polymer C4.

### (Ink K4)

A pigment ink K4 was prepared in the same manner as the preparation of the ink K1 except that the pigment dispersion PK1 was replaced with the pigment dispersion PK4.

### (Ink C4)

A pigment ink C4 was prepared in the same manner as the preparation of the ink K4 except that the carbon black was replaced with Pigment Blue 15:3.

### (Ink M4)

A pigment ink M4 was prepared in the same manner as the preparation of the ink K4 except that the carbon black was replaced with Pigment Red 122.

### (Ink Y4)

A pigment ink Y4 was prepared in the same manner as the preparation of the ink K4 except that the carbon black was replaced with Pigment Yellow 109.

A print 1D was prepared in the same manner as Example 1 using the reactive liquid S1 employed in Example 1 and the inks K4, C4, M4 and Y4. Under visual observation, the print 1D did not show bleeding or blur between colors. Also when a print portion was rubbed with an edge portion of other paper about 5 seconds after printing, the printed image did not run. The printed portions with the inks K4, C4, M4 and Y4 showed optical reflective densities, measured by a reflective densitometer RD-191 (manufactured by Gretag Macbeth Inc.), of 1.3, 1.25, 1.3 and 1.2 respectively.

### <Comparative Example 1>

A print 1E was prepared using the inks K1, C1, M1 and Y1 on plain PB paper (manufactured by Canon Inc.) but without using the reactive liquid S1.

Under visual observation, the print 1E showed bleeding between colors. However, when a print portion was rubbed about 5 seconds after printing with a paper edge, the printed image did not run. The printed portions with the inks K1, C1, M1 and Y1 showed optical reflective densities, measured by a reflective densitometer RD-191 (manufactured by Gretag Macbeth Inc.), of 0.88, 0.83, 0.72 and 0.68 respectively. A comparison with the print prepared in Example 1 indicates that the color developing property is evidently lower than in Example 1.

### <Comparative Example 2>

A polymer of random polymerization was prepared and used as the pigment dispersant as follows.

### (Synthesis of random polymer C5)

A mixture of 30 parts of acrylic acid, 20 parts of methyl methacrylate, 50 parts of styrene and an appropriate amount of azobisisobutyronitrile was added dropwise to tetrahydrofuran under N₂ flow at 75°C to carry out radical polymerization. The unreacted substance was removed by precipitation purification to obtain a random polymer C5. The random polymer C5 had a number-average molecular weight of 7,000 and a weight-average molecular weight of 15,000.

### (Pigment dispersion PK5)

A pigment dispersion PK5 was prepared in the same manner as the preparation of the pigment dispersion PK1 except that the graft polymer C1 was replaced with the random polymer C5.

### (Ink K5)

A pigment ink K6 was prepared in the same manner as the preparation of the ink K1 except that the pigment dispersion PK1 was replaced with the pigment dispersion PK5.

### (Ink C5)

A pigment ink C5 was prepared in the same manner as the preparation of the ink K5 except that the carbon black was replaced with Pigment Blue 15:3.

### (Ink M5)

A pigment ink M5 was prepared in the same manner as the preparation of the ink K5 except that the carbon black was replaced with Pigment Red 122.

### (Ink Y5)

A pigment ink Y5 was prepared in the same manner as the preparation of the ink K5 except that the carbon black was replaced with Pigment Yellow 109.

A print 1F was prepared in the same manner as Example 1 using the reactive liquid S1 employed in Example 1 and the inks K5, C5, M5 and Y5.

Under visual observation, the print 1F did not show bleeding or blur colors. Also when a print portion was rubbed with an edge portion of other paper about 5 seconds after printing , the printed image did not run. The printed portions with the inks K5, C5, M5 and Y5 showed optical reflective densities, measured by a reflective densitometer RD-191 (manufactured by Gretag Macbeth Inc.), of 1.2, 1.1, 1.1 and 1.0 respectively. A comparison with the print obtained in Example 1 indicates that the color developing property is evidently higher in Example 1 than in Comparative Example 2.

### <Example 5>

### (Synthesis of side chain polymer A4)

A mixture of 100 parts of benzyl acrylate and an appropriate amount of azobisisobutyronitrile was added dropwise to propylene glycol monomethyl ether under N₂ flow at 75°C to carry out radical polymerization. The unreacted substance was removed by precipitation purification, and 80 parts of an obtained purified product was dissolved in propylene glycol monomethyl ether, to which a mixture of 20 parts of glycidyl methacrylate and an appropriate amount of azobisisobutyronitrile was added dropwise under N₂ flow at 75°C to carry out radical polymerization. The unreacted substance was removed by precipitation purification, to obtain a side chain polymer A4 having a glycidyl group at the end. The side chain polymer A4 had a number-average molecular weight of 1,000 and a weight-average molecular weight of 2,300.

### (Synthesis of main chain polymer B3)

A mixture of 70 parts of methyl acrylate, 30 parts of 2-hydroxyethyl methacrylate and an appropriate amount of azobisisobutyronitrile was added dropwise to propylene glycol monomethyl ether under N₂ flow at 75°C to carry out radical polymerization. The unreacted substance was removed by precipitation purification to obtain a main chain polymer B3 having a hydroxyl group capable of reacting with the glycidyl group introduced into the side chain polymer A4. The main chain polymer B3 had a number-average molecular weight of 5,000 and a weight-average molecular weight of 6,600.

### (Synthesis of graft polymer C6)

60 parts of the main chain polymer B3 and 40 parts of the side chain polymer A4 obtained above were dissolved in tetrahydrofuran (THF) and were reacted for 3 hours at 80°C. The unreacted substance was removed by precipitation purification, the reaction product was dried under a reduced pressure, then dissolved in a 0.1 N THF solution of sodium hydroxide and agitated for 2 hours at 60°C to hydrolyze methyl acrylate in the main chain to acrylic acid. Then the obtained product was again dissolved in 1000 parts of hexane to remove unreacted substance by precipitation and dried under a reduced pressure to obtain a graft polymer C6. The graft polymer C6 had a number-average molecular weight of 8,000 and a weight-average molecular weight of 15,000.

All the monomer materials used in the side chain polymer A4 have a hydrophobic functional group, while all the monomer materials introduced in the main chain polymer B3 after hydrolysis are monomer materials having a hydrophilic functional group, so that all the monomer units constituting the side chain of the graft polymer C6 are, by 100 mass%, monomer units having a hydrophobic functional group and all the monomer units constituting the main chain are, by 100 mass%, monomer units having a hydrophilic functional group.

### (Pigment dispersion PK6)

A pigment dispersion PK6 was prepared in the same manner as the preparation of the pigment dispersion PK1 except that the graft polymer C1 used in the preparation of the pigment dispersion PK1 was replaced with the graft polymer C6.

### (Ink K6)

A pigment ink K6 was prepared in the same manner as the preparation of the ink K1 except that the pigment dispersion PK1 was replaced with the pigment dispersion PK6.

### (Ink C6)

A pigment ink C6 was prepared in the same manner as the preparation of the ink K6 except that the carbon black was replaced with Pigment Blue 15:3.

### (Ink M6)

A pigment ink M6 was prepared in the same manner as the preparation of the ink K6 except that the carbon black was replaced with Pigment Red 122.

### (Ink Y6)

A pigment ink Y6 was prepared in the same manner as the preparation of the ink K6 except that the carbon black was replaced with Pigment Yellow 109.

A print 1G was prepared in the same manner as in Example 1 using the reactive liquid S1 employed in Example 1 and the inks K6, C6, M6 and Y6.

Under visual observation, the print 1G did not show bleeding or blur between colors. Also when a print portion was rubbed with an edge portion of other paper about 5 seconds after printing, the printed image did not run. The printed portions with the inks K6, C6, M6 and Y6 showed optical reflective densities, measured by a reflective densitometer RD-191 (manufactured by Gretag Macbeth Inc.), of 1.3, 1.35, 1.3 and 1.3 respectively.

### <Comparative Example 3>

As a pigment dispersant, there was employed a graft polymer which was prepared as follows and in which the main chain is mainly constituted of monomer units having a hydrophobic functional group and the side chain is mainly constituted of monomer units having a hydrophilic functional group.

### (Synthesis of side chain polymer A5)

A mixture of 2.0 parts of 3-mercaptopropionic acid, 80 parts of methyl acrylate and an appropriate amount of azobisisobutyronitrile was added dropwise to 300 parts of propylene glycol monomethyl ether over 3 hours under N₂ flow and at 75°C. Then 10 parts of glycidyl methacrylate, 0.01 parts of hydroquinone, 0.05 parts of N,N-dimethyldodecylamine were added and reacted for 5 hours at 90°C. The obtained reaction product was dissolved in 1000 parts of hexane and the unreacted substance was removed by precipitation purification, thereby obtaining a side chain polymer A5. The side chain polymer A5 had a number-average molecular weight of 1,800 and a weight-average molecular weight of 2,500.

### (Synthesis of graft polymer C7)

30 parts of the side chain polymer A5 in solid was dissolved in 300 parts of propylene glycol monomethyl ether, to which solution a mixture of 70 parts of benzyl methacrylate and an appropriate amount of azobisisobutyronitrile was added dropwise under N₂ flow at 75°C, and reacted for 2 hours. Thus obtained reaction product was diluted in 1000 parts of hexane, then the unreacted substance was removed by precipitation purification. The reaction product was dried under a reduced pressure, then dissolved in a 0.1 N THF solution of sodium hydroxide and agitated for 2 hours at 60°C to hydrolyze methyl acrylate in the main chain into acrylic acid. Then the obtained product was again dissolved in 1000 parts of hexane to remove unreacted substance by precipitation purification and dried under a reduced pressure to obtain a graft polymer C7. The graft polymer C7 had a number-average molecular weight of 10,000 and a weight-average molecular weight of 15,000.

### (Pigment dispersion PK7)

A pigment dispersion PK7 was prepared in the same manner as the preparation of the pigment dispersion PK1 except that the graft polymer C1 was replaced with the graft polymer C7.

### (Ink K7)

A pigment ink K7 was prepared in the same manner as the preparation of the ink K1 except that the pigment dispersion was replaced with the pigment dispersion PK7.

### (Ink C7)

A pigment ink C7 was prepared in the same manner as in the preparation of the ink K7 except that the carbon black was replaced with Pigment Blue 15:3.

### (Ink M7)

A pigment ink M7 was prepared in the same manner as in the preparation of the ink K7 except that the carbon black was replaced with Pigment Red 122.

### (Ink Y7)

A pigment ink Y7 was prepared in the same manner as the preparation of the ink K7 except that the carbon black was replaced with Pigment Yellow 109.

A print 1H was prepared in the same manner as in Example 1 using the reactive liquid S1 and the inks K7, C7, M7 and Y7.

Under visual observation, the print 1H did not show bleeding or blur between colors. Also when a print portion was rubbed with an edge portion of other paper about 5 seconds after printing, the printed image did not run. The printed portions with the inks K7, C7, M7 and Y7 showed optical reflective densities, measured with a reflective densitometer RD-191 (manufactured by Gretag Macbeth Inc.), of 1.2, 1.1, 1.1 and 1.1 respectively. A comparison with the print obtained in Example 1 indicates that the color developing property is clearly higher in Example 1 than in Comparative Example 3.

## Claims

1. An ink set comprising independently an ink jet ink and a reactive liquid employed together with the ink, said ink containing a pigment in a dispersed state, and said liquid containing a cation and causing aggregation of said pigment in said ink in contact with said ink on a recording medium,
wherein said ink further contains a graft polymer capable of reacting with the cation, 50 mass% or more monomer units constituting a main chain of the graft polymer are monomer units having a hydrophilic functional group, 50 mass% or more of monomer units constituting side chains of the graft polymer are monomer units having a hydrophobic functional group, and the hydrophilic functional group is a carboxyl group.

2. The ink set according to claim 1, wherein 70 mass% or more monomer units constituting a main chain of the graft polymer are monomer units having a hydrophilic functional group and 70 mass% or more of monomer units constituting side chains of the graft polymer are monomer units having a hydrophobic functional group.

3. The ink set according to claim 1, wherein the monomer unit having a hydrophilic functional group comprises 10 to 50 mass% of all the monomer units constituting the graft polymer, and the monomer unit having a hydrophobic functional group comprises 40 to 90 mass% of the monomer units constituting the graft polymer.

4. The ink set according to claim 1, wherein the monomer unit having a hydrophilic functional group is derived from acrylic acid.

5. The ink set according to claim 1, wherein the monomer unit having a hydrophobic functional group is derived from an aromatic vinyl compound.

6. The ink set according to claim 5, wherein the aromatic vinyl compound is benzyl (meth)acrylate.

7. The ink set according to claim 1, wherein the graft polymer has a weight-average molecular weight from 1,000 to 30,000.

8. An image recording method comprising the steps of:
providing an ink jet ink containing a pigment in a dispersed state;
providing a reactive liquid which contains a cation and causes aggregation of the pigment in the ink in contact with the ink on a recording medium;
applying the reactive liquid onto the recording medium; and then
applying the ink onto the recording medium to cause contact with the reactive liquid on the recording medium,
wherein said ink further contains a graft polymer capable of reacting with the cation, 50 mass% or more monomer units constituting a main chain of the graft polymer are monomer units having a hydrophilic functional group, 50 mass% or more of monomer units constituting side chains of the graft polymer are monomer units having a hydrophobic functional group, and the hydrophilic functional group is a carboxyl group.

9. The image recording method according to claim 8, wherein 70 mass% or more monomer units constituting a main chain of the graft polymer are monomer units having a hydrophilic functional group and 70 mass% or more of monomer units constituting side chains of the graft polymer are monomer units having a hydrophobic functional group, and the hydrophilic functional group is a carboxyl group.

10. The image recording method according to claim 8, wherein the monomer unit having a hydrophilic functional group comprises 10 to 50 mass% of all the monomer units constituting the graft polymer, and the monomer unit having a hydrophobic functional group comprises 40 to 90 mass% of the monomer units constituting the graft polymer.

11. An image recording method according to claim 8, wherein the monomer unit having a hydrophilic functional group is derived from acrylic acid.

12. An image recording method according to claim 8, wherein the monomer unit having a hydrophobic functional group is derived from an aromatic vinyl compound.

13. An image recording method according to claim 12, wherein the aromatic vinyl compound is benzyl (meth) acrylate.

14. An image according method according to claim 8, wherein the graft polymer has a weight-average molecular weight from 1,000 to 30,000.

15. An image recording apparatus comprising storing means (1012) independently storing an ink jet ink and a reactive liquid as specified in the ink set according to any one of claims 1 to 7, means for applying said ink jet ink onto a recording medium, and means for applying said reactive liquid onto the recording medium prior to the ink application, thereby causing contact of said reactive liquid and said ink on the recording medium.

## Patentansprüche

1. Tintensatz, umfassend unabhängig voneinander eine Tintenstrahltinte und eine zusammen mit der Tinte verwendete reaktive Flüssigkeit, wobei die Tinte ein Pigment in einem dispergierten Zustand enthält und die Flüssigkeit ein Kation enthält und zu einer Aggregation des Pigmentes in der Tinte beim Kontakt mit der Tinte auf einem Aufzeichnungsmedium führt,
wobei die Tinte ferner ein Pfropfpolymer, das mit dem Kation reagieren kann, enthält, wobei 50 Masse-% oder mehr Monomereinheiten, die eine Hauptkette des Pfropfpolymers bilden, Monomereinheiten mit einer hydrophilen funktionellen Gruppe sind, 50 Masse-% oder mehr Monomereinheiten, die Seitenketten des Pfropfpolymers bilden, Monomereinheiten mit einer hydrophoben funktionellen Gruppe sind und die hydrophile funktionelle Gruppe eine Carboxylgruppe ist.

2. Tintensatz nach Anspruch 1, bei dem
70 Masse-% oder mehr der Monomereinheiten, die eine Hauptkette des Pfropfpolymers bilden, Monomereinheiten mit einer hydrophilen funktionellen Gruppe sind und 70 Masse-% oder mehr Monomereinheiten, die Seitenketten des Pfropfpolymers bilden, Monomereinheiten mit einer hydrophoben funktionellen Gruppe sind.

3. Tintensatz nach Anspruch 1, bei dem
die Monomereinheit mit einer hydrophilen funktionellen Gruppe 10 bis 50 Masse-% aller Monomereinheiten, die das Pfropfpolymer bilden, ausmacht, und die Monomereinheit mit einer hydrophoben funktionellen Gruppe 40 bis 90 Masse-% der Monomereinheiten, die das Pfropfpolymer bilden, ausmacht.

4. Tintensatz nach Anspruch 1, bei dem
die Monomereinheit mit einer hydrophilen funktionellen Gruppe von Acrylsäure stammt.

5. Tintensatz nach Anspruch 1, bei dem
die Monomereinheit mit einer hydrophoben funktionellen Gruppe von einer aromatischen Vinylverbindung stammt.

6. Tintensatz nach Anspruch 5, bei dem
die aromatische Vinylverbindung Benzyl(meth)acrylat ist.

7. Tintensatz nach Anspruch 1, bei dem
das Pfropfpolymer ein Gewichtsmittel des Molekulargewichts von 1.000 bis 30.000 aufweist.

8. Bildaufzeichnungsverfahren, umfassend die Schritte:
Bereitstellen einer Tintenstrahltinte, die ein Pigment in einem dispergierten Zustand enthält;
Bereitstellen einer reaktiven Flüssigkeit, die ein Kation enthält und zu einer Aggregation des Pigments in der Tinte beim Kontakt mit der Tinte auf einem Aufzeichnungsmedium führt;
Aufbringen der reaktiven Flüssigkeit auf das Aufzeichnungsmedium; und danach
Aufbringen der Tinte auf das Aufzeichnungsmedium, so dass es zu einem Kontakt mit der reaktiven Flüssigkeit auf dem Aufzeichnungsmedium kommt,
wobei die Tinte ferner ein Pfropfpolymer, das mit dem Kation reagieren kann, enthält, wobei 50 Masse-% oder mehr Monomereinheiten, die eine Hauptkette des Pfropfpolymers bilden, Monomereinheiten mit einer hydrophilen funktionellen Gruppe sind, 50 Masse-% oder mehr Monomereinheiten, die Seitenketten des Pfropfpolymers bilden, Monomereinheiten mit einer hydrophoben funktionellen Gruppe sind und die hydrophile funktionelle Gruppe eine Carboxylgruppe ist.

9. Verfahren nach Anspruch 8, bei dem
70 Masse-% oder mehr Monomereinheiten, die eine Hauptkette des Pfropfpolymers bilden, Monomereinheiten mit einer hydrophilen funktionellen Gruppe sind, und 70 Masse-% oder mehr Monomereinheiten, die Seitenketten des Pfropfpolymers bilden, Monomereinheiten mit einer hydrophoben funktionellen Gruppe sind und die hydrophile funktionelle Gruppe eine Carboxylgruppe ist.

10. Verfahren nach Anspruch 8, bei dem
die Monomereinheit mit einer hydrophilen funktionellen Gruppe 10 bis 50 Masse-% aller Monomereinheiten, die das Pfropfpolymer bilden, ausmacht, und die Monomereinheit mit einer hydrophoben funktionellen Gruppe 40 bis 90 Masse-% der Monomereinheiten, die das Pfropfpolymer bilden, ausmacht.

11. Verfahren nach Anspruch 8, bei dem
die Monomereinheit mit einer hydrophilen funktionellen Gruppe von Acrylsäure stammt.

12. Verfahren nach Anspruch 8, bei dem
die Monomereinheit mit einer hydrophoben funktionellen Gruppe von einer aromatischen Vinylverbindung stammt.

13. Verfahren nach Anspruch 12, bei dem
die aromatische Vinylverbindung Benzyl(meth)acrylat ist.

14. Verfahren nach Anspruch 8, bei dem
das Pfropfpolymer ein Gewichtsmittel des Molekulargewichts von 1.000 bis 30.000 aufweist.

15. Bildaufzeichnungsvorrichtung, umfassend
eine Speichereinrichtung (1012), die unabhängig voneinander eine Tintenstrahltinte und eine reaktive Flüssigkeit, wie diese im Tintensatz nach einem der Ansprüche 1 bis 7 angegeben sind, speichert, eine Einrichtung zum Aufbringen der Tintenstrahltinte auf ein Aufzeichnungsmedium und eine Einrichtung zum Aufbringen der reaktiven Flüssigkeit auf das Aufzeichnungsmedium vor dem Aufbringen der Tinte, wodurch es zu einem Kontakt der reaktiven Flüssigkeit und der Tinte auf dem Aufzeichnungsmedium kommt.

## Revendications

1. Assortiment d'encres comprenant indépendamment une encre pour jet d'encre et un liquide réactif utilisé avec l'encre, ladite encre contenant un pigment dans un état dispersé, et ledit liquide contenant un cation et provoquant un agrégation dudit pigment dans ladite encre en contact avec ladite encre sur un support d'enregistrement,
dans lequel ladite encre contient en outre un polymère greffé capable de réagir avec le cation, 50 % en masse ou plus de motifs monomères constituant une chaîne principale du polymère greffé sont des motifs monomères ayant un groupe fonctionnel hydrophile, 50 % en masse ou plus de motifs monomères constituant des chaînes latérales du polymère greffé sont des motifs monomères ayant un groupe fonctionnel hydrophobe, et le groupe fonctionnel hydrophile est un groupe carboxyle.

2. Assortiment d'encres selon la revendication 1, dans lequel 70 % en masse ou plus de motifs monomères constituant une chaîne principale du polymère greffé sont des motifs monomères ayant un groupe fonctionnel hydrophile et 70 % en masse ou plus de motifs monomères constituant des chaînes latérales du polymère greffé sont des motifs monomères ayant un groupe fonctionnel hydrophobe.

3. Assortiment d'encres selon la revendication 1, dans lequel le motif monomère ayant un groupe fonctionnel hydrophile constitue 10 à 50 % en masse de la totalité des motifs monomères constituant le polymère greffé, et le motif monomère ayant un groupe fonctionnel hydrophobe constitue 40 à 90 % en masse des motifs monomères constituant le polymère greffé.

4. Assortiment d'encres selon la revendication 1, dans lequel le motif monomère ayant un groupe fonctionnel hydrophile est dérivé de l'acide acrylique.

5. Assortiment d'encres selon la revendication 1, dans lequel le motif monomère ayant un groupe fonctionnel hydrophobe est dérivé d'un composé aromatique de vinyle.

6. Assortiment d'encres selon la revendication 5, dans lequel le composé aromatique de vinyle est du (méth)acrylate de benzyle.

7. Assortiment d'encres selon la revendication 1, dans lequel le polymère greffé a un poids moléculaire moyen en poids de 1000 à 30 000.

8. Procédé d'enregistrement d'image comprenant les étapes qui consistent:
à utiliser une encre pour jet d'encre contenant un pigment dans un état dispersé ;
à utiliser un liquide réactif qui contient un cation et provoque une agrégation du pigment dans l'encre en contact avec l'encre sur un support d'enregistrement ;
à appliquer le liquide réactif sur le support d'enregistrement ; puis
à appliquer l'encre sur le support d'enregistrement pour provoquer un contact avec le liquide réactif sur le support d'enregistrement,
dans lequel ladite encre contient en outre un polymère greffé capable de réagir avec le cation, 50 % en masse ou plus de motifs monomères constituant une chaîne principale du polymère greffé sont des motifs monomères ayant un groupe fonctionnel hydrophile, 50 % en masse ou plus de motifs monomères constituant des chaînes latérales du polymère greffé sont des motifs monomères ayant un groupe fonctionnel hydrophobe, et le groupe fonctionnel hydrophile est un groupe carboxyle.

9. Procédé d'enregistrement d'image selon la revendication 8, dans lequel 70 % en masse ou plus de motifs monomères constituant une chaîne principale du polymère greffé sont des motifs monomères ayant un groupe fonctionnel hydrophile et 70 % en masse ou plus de motifs monomères constituant des chaînes latérales du polymère greffé sont des motifs monomères ayant un groupe fonctionnel hydrophobe, et le groupe fonctionnel hydrophile est un groupe carboxyle.

10. Procédé d'enregistrement d'image selon la revendication 8, dans lequel le motif monomère ayant un groupe fonctionnel hydrophile constitue 10 à 50 % en masse de la totalité des motifs monomères constituant le polymère greffé, et le motif monomère ayant un groupe fonctionnel hydrophobe constitue 40 à 90 % en masse des motifs monomères constituant le polymère greffé.

11. Procédé d'enregistrement d'image selon la revendication 8, dans lequel le motif monomère ayant un groupe fonctionnel hydrophile est dérivé de l'acide acrylique.

12. Procédé d'enregistrement d'image selon la revendication 8, dans lequel le motif monomère ayant un groupe fonctionnel hydrophobe est dérivé d'un composé aromatique de vinyle.

13. Procédé d'enregistrement d'image selon la revendication 12, dans lequel le composé aromatique de vinyle est du (méth)acrylate de benzyle.

14. Procédé d'enregistrement d'image selon la revendication 8, dans lequel le polymère greffé a un poids moléculaire moyen en poids de 1000 à 30 000.

15. Appareil d'enregistrement d'image comportant un moyen d'emmagasinage (1012) emmagasinant indépendamment une encre pour jet d'encre et un liquide réactif, comme spécifié dans l'assortiment d'encres selon l'une quelconque des revendications 1 à 7, un moyen destiné à appliquer ladite encre pour jet d'encre sur un support d'enregistrement, et un moyen destiné à appliquer ledit liquide réactif sur le support d'enregistrement avant l'application de l'encre, provoquant ainsi un contact dudit liquide réactif et de ladite encre sur le support d'enregistrement.
